(19) Europäisches Patentamt
European Patent Office
Office européen des brevets

(11) EP 3 238 879 A1

(12) EUROPEAN PATENT APPLICATION

(43) Date of publication:
01.11.2017 Bulletin 2017/44

(51) Int Cl.:
B24D 3/28 (2006.01)          C09K 3/14 (2006.01)

(21) Application number: 16166808.2

(22) Date of filing: 25.04.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: 3M Innovative Properties Company
Saint Paul, MN 55133-3427 (US)

(72) Inventors:
• Westberg, Fredrik
593 41 Västervik (SE)
• Kirschner, Andrea
9500 Villach (AT)
• Kofler, Josef
9500 Villach (AT)

(74) Representative: Mössner, Brigitte
3M Deutschland GmbH
Office of Intellectual Property Counsel
(PC 072P)
Carl-Schurz-Strasse 1
41453 Neuss (DE)

(54) RESIN BONDED CUT-OFF TOOL

(57) The invention relates to a resin bonded cut-off tool. The resin bonded cut-off tool comprises rod shaped sintered bauxite abrasives, wherein an amount of the rod shaped sintered bauxite abrasives is at least 10% to 90% by weight, based on 100% by weight of a Grinding Active Matrix (GAM) of the cut-off tool. The resin bonded cut-off tool comprises further a bonding agent in an amount of 10% to 40% by weight, based on 100% by weight of the GAM of the cut-off tool and fused and/or sintered abrasives in an amount sufficient to bring the GAM of the cut-off tool to 100% by weight.

Fig. 1

**Description**

The present invention relates to a resin bonded cut-off tool, particularly a cut-off wheel, with low production cost and increased cutting performance.

Although the invention is explained and discussed in conjunction with a resin bonded cut-off tool, in particular a cut-off wheel, the principles of the invention may easily be transferred to other material removing machining tools.

Bonded abrasive tools have abrasive particles bonded together by a bonding agent. Typical types of bonding agents used to make bonded abrasive tools are: resinoid, vitrified, and metal. Bonded abrasive tools include, for example grinding wheels, cut-off-wheels, grindstones, honing rings, etc.

Cut-off tools are typically thin wheels used for general cutting operations. The wheels are typically about 20 to about 2000 millimeter (mm) in diameter, and from less than one millimeter (mm) to about 22 mm thick. Typically, the thickness can be about one percent of the diameter. They are typically operated at speeds of from about 35 m/sec to 100 m/sec, and are used for operations such as cutting metal or stone to a nominal length, for example.

Cut-off wheels are also known as "abrasive cut-off saw blades" or as "chop saws". As their name implies, cut-off wheels are commonly used to cut stock (i.e., a workpiece) such as, for example, metal rods, by abrading through the stock.

Cut-off wheels can also be used in dry cutting, wet-cutting, cold-cutting, warm-cutting, and hot-cutting applications.

A bonding agent of cut-off tools is typically a cured organic binder. Resin bonded tools utilize an organic binder system based on, e.g., a phenolic resin and fillers such as metal sulfides, metal oxides or metal halogenides.

Resin bonded cut-off tools can inter alia comprise glass fabrics and metal plates such acting as reinforcement.

Typical abrasives being used in cut-off tools are based on alumina and silicon carbide. Considering alumina all types of fused alumina are in use, e.g., brown fused alumina, zirconia alumina, white fused alumina, etc. Their shape typically can be irregular, so-called crushed abrasives, and their size can be a typical grading to be used in bonded abrasives, e.g., according to ISO 8486 or ANSI B74.12. Beyond fused alumina sol-gel based alumina and sintered alumina can be used in irregular shaped or even precisely shaped grades.

In general the abrasive fraction of the resin bonded cut-off tool can contain one type of abrasive or a blend of different types of abrasives. The same complies with the corresponding grading of the abrasives, for example rod shaped abrasives.

US2014287654 (A1) relates to methods of abrading a workpiece using a bonded abrasive wheel.

There is a need to further develop resin bonded cut-off tools, in particular resin bonded cut-off wheels, to enhance the cutting performance.

This need is met by a resin bonded cut-off tool having the features of claim 1.

Surprisingly, it has been found out that resin bonded cut-off tools comprising rod shaped sintered bauxite abrasives - also called black rods - show an increased cutting performance towards such based on crushed fused alumina types. When using rod shaped sintered bauxite abrasives the cutting performance increase is even higher than of such resin bonded cut-off tools made of rod shaped sintered alumina abrasives - also called white rods. That is to say, that black rods have inter alia a better cutting performance than white rods. As an additional advantage the lower cost for the rod shaped sintered bauxite abrasives in comparison to the rod shaped sintered alumina abrasives or certain types of crushed fused alumina like zirconia alumina needs to be taken into account.

When evaluating the cutting performance of abrasive tools (e.g., grinding wheels and cut-off wheels), a ratio known as the G-ratio is commonly used. The G-ratio has been variously defined as:

•    weight in gram of stock removed divided by the weight in gram of wheel lost;

•    volume of stock removed divided by the volume of wheel lost; and

•    as the cross-sectional area of the cut formed in the stock divided by the area on the round side of the resin bonded cut-off wheel that is lost.

As used herein, the term "G-ratio" refers only to the latter definition also known as $G_A$-factor (i.e., the cross-sectional area of the cut formed in the stock divided by the area on the round side of the cut-off wheel that is lost).

An aspect of the disclosure pertains to a resin bonded cut-off tool, particularly resin bonded cut-off wheel, comprising rod shaped sintered bauxite abrasives, and wherein an amount of the rod shaped sintered bauxite abrasives is at least 10% to 90% by weight, based on 100% by weight of a Grinding Active Matrix of the cut-off tool. The resin bonded cut-off tool further comprises a bonding agent in an amount of 10% to 40% by weight, based on 100% by weight of the GAM of the cut-off tool and fused and/or sintered abrasives in amount sufficient to bring the GAM of the cut-off tool to 100% by weight. The Grinding Active Matrix (GAM) is the weight of the cut-off tool, particularly resin bonded cut-off wheel, comprising abrasive particles and bonding agent, viz. the complete weight of the cut-off tool without substantially any additional components. These additional components are for example fabrics, reinforcement plates and/or fixing elements.

The fused and/or sintered abrasives and mixtures of several abrasives can comprise brown fused alumina, white fused alumina, zirconia alumina, sintered alumina, silicon carbide etc.

According to some embodiments of the resin bonded cut-off tool the rod shaped sintered bauxite abrasives comprise aluminum oxide ($Al_2O_3$) in an amount of 80% to 98% by weight, based on 100% by weight of the rod shaped sintered bauxite abrasives. The rod shaped sintered bauxite abrasives comprise further a mixture of ferric oxide ($Fe_2O_3$) and titanium dioxide ($TiO_2$) in an amount of 5% to 15% by weight, based on 100% by weight of the rod shaped sintered bauxite abrasives. Further, the rod shaped sintered bauxite abrasives comprise silicon dioxide ($SiO_2$) in an amount of 0.2% to 6% by weight, based on 100% by weight of the rod shaped sintered bauxite abrasives.

By the above mentioned composition of the rod shaped sintered bauxite abrasives (hereinafter also referred as to black rods) the corresponding resin bonded cut-off tool shows surprisingly an enhanced cutting performance in comparison with a resin bonded cut-off tool based on rod shaped sintered alumina abrasives (hereinafter also referred as to white rods).

Table 1: Comparison of rod shaped sintered alumina abrasives (white rods) to rod shaped sintered bauxite abrasives (black rods) with respect to corresponding material composition and tool performance.

| | Rod shaped sintered alumina abrasives | | Rod shaped sintered bauxite abrasives |
|---|---|---|---|
| | | | |
| Abrasive type | so-called white rod [sintered alumina] | | so-called black rod [sintered bauxite] |
| $Al_2O_3$ amount in [wt.%]* | >98.5 | | 80-98 |
| $Fe_2O_3$+$TiO_2$ amount in [wt. %] | <1 | | 5-15 |
| $SiO_2$ amount in [wt.%] | <0.3 | | 0.2-6 |
| Tool performance (lab test; $G_A$) | 100% | | 107-150% |
| * [wt.%] = % by weight | | | |

As can be seen from table 1 the tool performance of black rods is enhanced by 7% to 50% in comparison with white rods, wherein the tool performance is normalized to 100% with respect to the resin bonded cut-off tool comprising white rods. In Addition, black rods are cheaper than white rods.

According to some other embodiments of the resin bonded cut-off tool, the rod shaped sintered bauxite, the bonding agent and the fused and/or sintered abrasives are arranged within a fabric and/or a plate. In other words the rod shaped sintered bauxite, the bonding agent and the fused and/or sintered abrasives can be combined with reinforcement. The reinforcement can be the fabric and/or the plate. The fabric or the plate can reinforce the resin bonded cut-off tool during cutting operation. The fabrics can be made of glass, basalt, aramide or carbon-fibers. The plates can be made of steel.

According to some other embodiments of the resin bonded cut-off tool, the resin bonded cut-off tool comprises a fixing element, such as a metal ring, for example. The fixing element can reinforce a bore of the resin bonded cut-off tool. The fixing element is located such to prevent a dynamic unbalance of the resin bonded cut-off tool during cutting operation.

According to some other embodiments of the resin bonded cut-off tool, the bonding agent comprises a phenol-formaldehyde resin. The bonding agent can comprise phenol-formaldehyde resin, at least one filler and a pigment. The bonding agent can in particular comprise Prefere 828528G in an amount of 36.8% by weight, Tribotecc®-Pyrox® rot 325 in an amount of 21.0% by weight, potassium aluminium fluoride in an amount of 21.0% by weight, Tribotecc®-GWZ® 100P in an amount of 20.8% by weight and Luvomaxx LB/S in an amount of 0.4% by weight. The here mentioned amounts by weight with respect to the bonding agent are based on 100% by weight of the bonding agent. In an initial state the here described bonding agent can comprise liquid resin and powder resin. The liquid resin and/or the powder resin can be based on phenol-formaldehyde resin. After curing the bonding agent has a solid state.

According to some other embodiments of the resin bonded cut-off tool, the rod shaped sintered bauxite abrasives comprise grains with a grain size of smaller than 15.0 micrometer, preferably of smaller than 8 micrometers, more preferably of 0.5 to 7.5 micrometer, most preferably of 2.5 to 5.0 micrometers.

By using the here described grain size the cutting performance of the rod shaped sintered bauxite abrasives can be improved.

According to some other embodiments of the resin bonded cut-off tool, the rod shaped sintered bauxite abrasives have a diameter between 0.3 and 1.6 mm and an average length between 0.3 to 4.0 mm. The here mentioned diameter and average length values can improve the cutting performance of the resin bonded cut-off tool.

The invention will be explained in greater detail with references to exemplary embodiments depicted in the illustrated test results as appended.

The accompanying illustrated tables, drawings and test results are included to provide a further understanding of the present invention and are incorporated in and constitute a part of this specification. The test results - illustrated as bar graph - and tables illustrate the embodiments of the present invention and together with the description serve to explain the principles of the invention. Other embodiments of the present invention and many of the intended advantages of the present invention will be readily appreciated as they become better understood by reference to the following detailed description. Like reference numerals designate corresponding similar parts.

The here described invention will be more fully appreciated with reference to the following non-limiting test results.

The shape and dimension of the used experimental cut-off tools was 400x6x40 (diameter x thickness x bore diameter in mm).

The abrasive fraction, i.e. the total amount of abrasives in the Grinding Active Matrix of the cut-off tool, comprises 100% of a specific abrasive type, e.g. rod shaped abrasive based on sintered alumina (WR or BR), or a blend of two types of abrasives, e.g., 50% brown fused alumina (BFA) and 50% rod shaped sintered bauxite abrasives (WR or BR). In case of brown fused alumina abrasives two different grades (F20 and F24 according to ISO 8486-1; d50 1040 $\mu$m (F20) and d50 885 $\mu$m (F24)) were used, in case of rod shaped abrasives Grade 24 (e.g., rod shaped sintered bauxite abrasives having a diameter 0.79 mm and average length 1.9 mm or having a diameter 0.65 mm and average length 1.5 mm; see Table 4) was chosen. A typical resin bond comprising phenol-formaldehyde resin and fillers based on iron sulfide, zinc sulfide, and potassium aluminum fluoride was chosen as bonding agent (see Table 4).

The composition of the abrasive fraction is listed in table 2.

The resin bonded cut-off tools can inter alia comprise two glass fabrics for wheel reinforcement and a metal ring for bore reinforcement.

Table 2 shows an overview of test sets 1 to 4. Exemplary composition of the resin bonded cut-off tools of the test sets 1 to 4 are shown in Table 2.

| Test set | | 1 | 2 | 3 | 4 |
|---|---|---|---|---|---|
| Components | | | | | |
| WR Grade 24 | [wt.%] | 72.20 | | 36.10 | |
| BR Grade 24 | [wt.%] | | 72.20 | | 36.10 |
| BFA F20 | [wt.%] | | | 18.05 | 18.05 |
| BFA F24 | [wt.%] | | | 18.05 | 18.05 |
| Bonding agent (liquid) | [wt.%] | 5.00 | 5.00 | 5.00 | 5.00 |
| Bonding agent (solid)* | [wt.%] | 22.80 | 22.80 | 22.80 | 22.80 |
| Glass fabric | [pcs.] | 2 | 2 | 2 | 2 |
| Metal ring | [pcs.] | 1 | 1 | 1 | 1 |
| Pressing density | [g/cm³] | 2.26 | 2.26 | 2.26 | 2.26 |
| * The bonding agent (solid) is composed of Resin solid 828528G 36.84 wt.%, Tribotecc®-Pyrox® rot 325 21.00 wt.%, Potassium Aluminium Fluoride 21.00 wt.%, Tribotecc®-GWZ® 100P 20.76 wt.% and Luvomax LB/S 0.40 wt.%. | | | | | |

Table 2: Exemplary composition of the resin bonded cut-off tools of the test sets 1 to 4. Abbreviations: WR: white rod (rod shaped sintered alumina abrasives), BR: black rod (rod shaped sintered bauxite abrasives), BFA: brown fused alumina (crushed abrasives)

Table 3 shows an overview of the composition of the corresponding abrasive fractions in the test sets 1 to 4.

| Abrasive fraction of test set | Type and contents of abrasives in use |
|---|---|
| 1 | 100% rod shaped sintered alumina abrasives, grade 24 (WR) |

(continued)

| Abrasive fraction of test set | Type and contents of abrasives in use |
|---|---|
| 2 | 100% rod shaped sintered bauxite abrasives, grade 24 (BR) |
| 3 | Blend of 50% rod shaped abrasive and 50% brown fused alumina, comprising 50% rod shaped sintered alumina abrasives in grade 24 (WR), and 25% brown fused alumina, grade F20 and F24 each |
| 4 | Blend of 50% rod shaped abrasive and 50% brown fused alumina, comprising 50% rod shaped sintered bauxite abrasives in grade 24 (BR), and 25% brown fused alumina, grade F20 and F24 each |

Table 3: Overview of the composition of the corresponding abrasive fractions in the test sets 1 to 4

Table 4 shows an exemplary list of the used raw material in the test sets 1 to 4.

| ID | Function | Raw material name and supplier |
|---|---|---|
| WR | Abrasive | Sinter Morundum SR-1, Showa Denko Grade 24: diameter 0.65 mm, average length 1.5 mm |
| BR | Abrasive | Sinter Morundum SM, Showa Denko Grade 24: diameter 0.79 mm, average length 1.9 mm |
| BFA | Abrasive | Alodur® RBT9, Imerys Fused Minerals |
| Bonding agent (liquid) | Phenol-formaldehyde resin (liquid) | Prefere 825174G, prefere resins |
| Bonding agent (solid) | Phenol-formaldehyde resin (solid) | Prefere 828528G, prefere resins |
| | Filler | Tribotecc® - Pyrox® rot 325, Tribotecc GmbH |
| | Filler | Potassium Aluminium Fluoride (PAF), KBM Affilips B.V. |
| | Filler | Tribotecc® - GWZ® 100P, Tribotecc GmbH |
| | Pigment | Luvomaxx LB/S, Lehmann&Voss&Co. |
| Glass fabric | Reinforcement | Glasgewebe-Ronden 1970 402/41, Tissa Glasweberei AG |
| Metal ring | Bore reinforcement | ZU22/b 60x40,8x4,5, Omes s.r.i. |

Table 4: Exemplary list of raw materials of the resin bonded cut-off tools of the test sets 1 to 4.

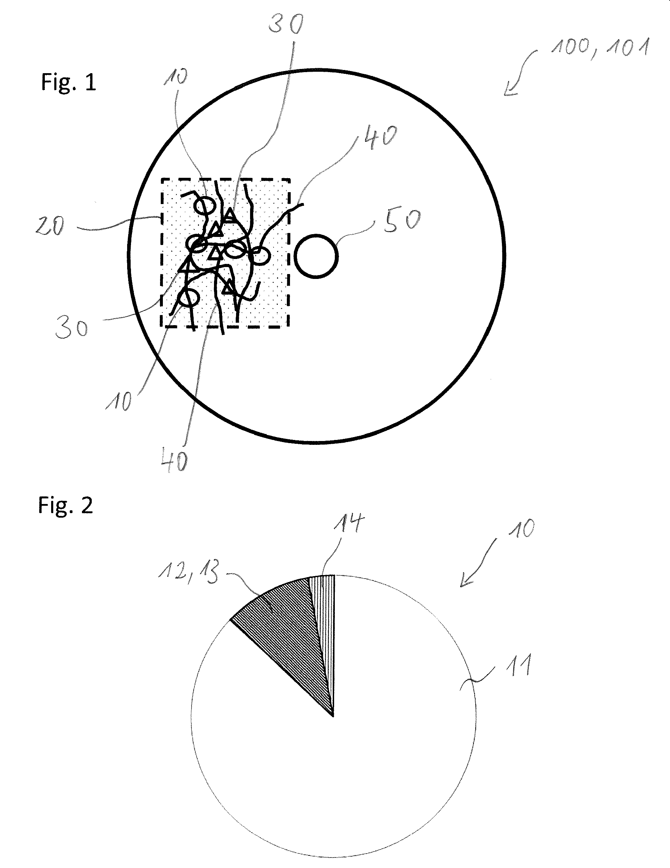

Fig. 1 schematically illustrates a resin bonded cut-off tool, particularly a resin bonded cut-off wheel, according to an embodiment of the invention;

Fig. 2 schematically illustrates a pie chart of an exemplary composition of rod shaped sintered bauxite abrasives according to an embodiment of the invention;

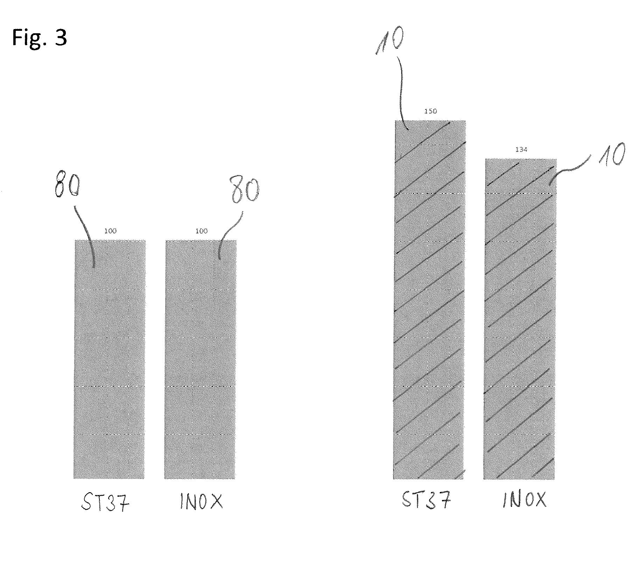

Fig. 3 shows a bar graph illustrating a cutting performance of resin bonded cut-off tools comprising an abrasive fraction based on 100% black rod abrasive (BR, test set 2) in comparison to such comprising 100% white rod abrasive (WR, test set 1) when applying a specific cut rate of 3.5 cm$^2$/s and cutting carbon steel (ST37) or stainless steel (INOX);

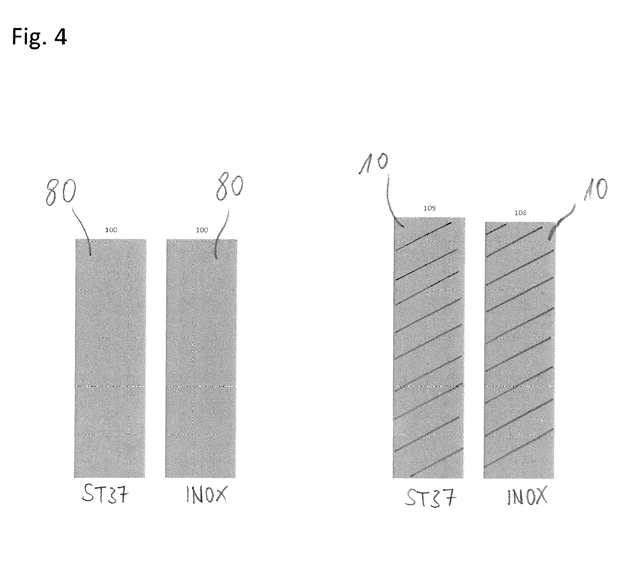

Fig. 4 shows a bar graph illustrating a cutting performance of resin bonded cut-off tools comprising an abrasive fraction based on 100% black rod abrasive (BR, test set 2) in comparison to such comprising 100% white rod abrasive (WR, test set 1) when applying a specific cut rate of 5.0 cm$^2$/s and cutting carbon steel (ST37) or stainless steel (INOX); and

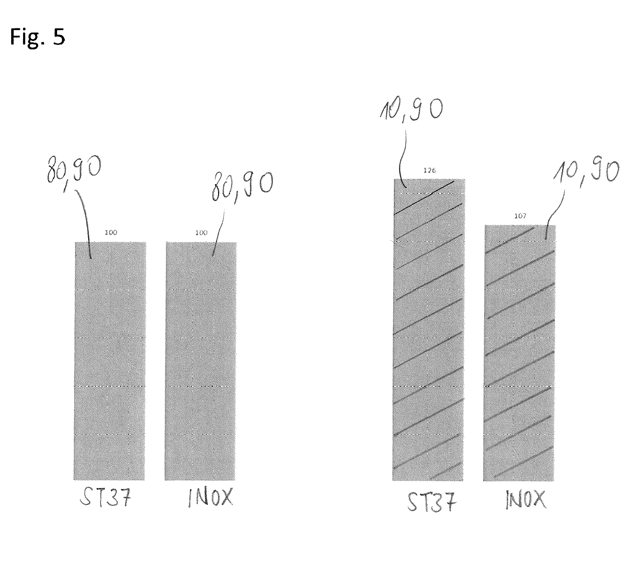

Fig. 5 shows a bar graph illustrating a cutting performance of resin bonded cut-off tools comprising an abrasive fraction based on 50% black rod abrasive and 50% brown fused alumina (BR+BFA, test set 4) in comparison to such comprising 50% white rod abrasive and 50% brown fused alumina (BR, test set 3) when applying a specific cut rate of 3.5 $cm^2$/s and cutting carbon steel (ST37) or stainless steel (INOX).

Abbreviations: ST37: carbon steel S235JR/1.0038, INOX: stainless steel XSCrNi18-10/1.4301

The test sets 1, 2, 3 and 4 (see table 3) illustrated in the corresponding Figs. 3, 4 and 5 are respectively normalized to 100% to the cutting performance of the resin bonded cut-off tools comprising the rod shaped sintered alumina (white rods).

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the figures.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Fig. 1 schematically illustrates a resin bonded cut-off tool, particularly a resin bonded cut-off wheel, according to an embodiment of the invention.

The resin bonded cut-off tool 100 illustrated as resin bonded cut-off wheel 101 is schematically illustrated in Fig 1. The resin bonded cut-off tool 100 comprises rod shaped sintered bauxite abrasives 10 (O-shape), wherein an amount of the rod shaped sintered bauxite abrasives 10 (O-shape) is at least 10% to 90% by weight, based on 100% by weight of a GAM of the cut-off tool. The resin bonded cut-off tool 100 comprises a bonding agent 20 in an amount of 10% to 40% by weight, based on 100% by weight of the GAM of the cut-off tool 100 and fused and/or sintered abrasives 30 (triangular shape) abrasives in amount sufficient to bring the GAM of the cut-off tool to 100% by weight. The bonding agent 20 is illustrated by the dotted area in Fig. 1.

The resin bonded cut-off tool can comprise at least a fabric 40, for example two glass fabrics, wherein the rod shaped sintered bauxite abrasives 10, the bonding agent 20 and the fused and/or sintered abrasives 30 are arranged within the at least one fabric 40. The resin bonded cut-off tool 100 can also comprise a fixing element 50, for example a metal ring, wherein the fixing element 50 can be suitable to reinforce a bore of the resin bonded cut-off wheel.

Fig. 2 schematically illustrates a pie chart of an exemplary composition of rod shaped sintered bauxite abrasives according to an embodiment of the invention.

Fig. 2 is a non-limiting example of a composition of the here described rod shapes sintered bauxite abrasives 10. The rod shapes sintered bauxite abrasives 10 comprise aluminum oxide ($Al_2O_3$) 11 in an amount of 80% to 98% by weight, preferably of 86% to 88% by weight, more preferably 87% by weight, based on 100% by weight of the rod shaped sintered bauxite abrasives. The rod shaped sintered bauxite abrasives further comprise a mixture of ferric oxide ($Fe_2O_3$) 12 and titanium dioxide ($TiO_2$) 13 in an amount of 5% to 15% by weight, preferably of 9% to 11% by weight, more preferably 10% by weight, based on 100% by weight of the sintered bauxite abrasives and silicon dioxide ($SiO_2$) 14 in an amount of 0.2% to 6% by weight, preferably of 2% to 4% by weight, more preferably 3% by weight, based on 100% by weight of the sintered bauxite abrasives.

Fig. 3 shows a bar graph illustrating a cutting performance of resin bonded cut-off tools comprising an abrasive fraction based on 100% black rod abrasive (BR, test set 2, right side of fig. 3 with hatched bars) in comparison to such comprising 100% white rod abrasive (WR, test set 1, left side of fig. 3) when applying a specific cut rate of 3.5 $cm^2$/s and cutting carbon steel (ST37) or stainless steel (INOX). Fig. 4 shows further test set as in shown in Fig. 3 with the difference that the specific cut rate has been increased to 5.0 $cm^2$/s.

Fig. 5 shows a bar graph illustrating a cutting performance of resin bonded cut-off tools comprising an abrasive fraction based on 50% black rod abrasive and 50% brown fused alumina (BR and BFA, test set 4, right side of fig. 5 with hatched bars) in comparison to such comprising 50% white rod abrasive and 50% brown fused alumina (BR, test set 3, left side of fig. 5) when applying a specific cut rate of 3.5 $cm^2$/s and cutting carbon steel (ST37) or stainless steel (INOX).

The cutting performance of the exemplary resin bonded cut-off tools was evaluated by using a stationary cut-off machine (Trennblitz, self-construction, motor power 22kW), operating at a peripheral work surface speed of 80m/s under dry conditions. The tests were conducted with a specific cut rate of 3.5 $cm^2$/s and a specific cut rate of 5 $cm^2$/s. The workpieces were round slabs in diameter 40 mm of carbon steel type ST37 (S235JR, 1.0038, from Salzgitter Gruppe) and stainless steel type Nirosta® 4301 (X5CrNi 18-10, 1.4301, from Krupp Edelstahlprofile). After conducting 20 cuts in full cut each $G_A$-factor as an index of the cutting performance of the cut-off wheel was evaluated. The $G_A$-factor is calculated from the ratio of the cut workpiece area (Aw) and the worn tool area (Avs):

$$G_A = A_W / A_{VS}$$

Figs 3, 4 and 5 show that

- the tool performance depends on the type of rod shaped abrasive, with respect to the cut-off tools tested it decreases in the order black rod (sintered bauxite) > white rod (sintered alumina). In other words the black rods have an increased cutting performance; and

- the content of rod shaped abrasive in the abrasive fraction of the resin bonded cut-off tool is direct proportional with the tool/cutting performance showing the best performance for a fraction comprising 100% rod shaped sintered bauxite abrasives.

The results for the $G_A$-factor normalized to the $G_A$-factor of tools comprising the corresponding white rod variant are shown in Figs. 3, 4 and 5. The values reflect the average value of two experimental wheels tested each under the same and specified test conditions.

In reference to the test results the 100% black rod variant 10 (test set 2; hatched bars) shows a cutting performance increase of +34-50% towards the corresponding white rod variant 80 (test set 1) when applying a specific cut rate of 3.5 cm$^2$/s (Fig. 3) and +8-9% when applying a specific cut rate of 5 cm$^2$/s (Fig. 4).

A cutting performance increases as well, when blending the rod shaped abrasive 10, 80 with brown fused alumina 90 (test set 4). In comparison to the corresponding white rod variant (test set 3) a 7-26% higher $G_A$-factor was observed, whereas the extent depends on the cut steel type (Fig. 5).

Considering the steel types (ST37 or INOX) cut according to the described test set-up it has been found out that the test sets comprising black rod abrasives show higher cutting performance when cutting carbon steel and applying a lower specific cut rate. See Figs. 3 and 5 a 16-19% higher $G_A$-factor was measured for carbon steel at a specific cut rate of 3.5 cm$^2$/s.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "having" and "in which" are used as the plain-English equivalents of the respective terms "comprising" and "wherein," respectively. Furthermore, "a" or "one" does not exclude a plurality in the present case.

Due to the test results it can be considered that more and more material removing machining tools comprise rod shaped sintered bauxite abrasives. Rod shaped sintered bauxite abrasives are a promising material for cutting tools with an expected ascending market share.

**Claims**

1. Resin bonded cut-off tool (100), particularly resin bonded cut-off wheel (101), comprising
   rod shaped sintered bauxite abrasives (10), wherein an amount of the rod shaped sintered bauxite abrasives (10) is at least 10% to 90% by weight, based on 100% by weight of a Grinding Active Matrix (GAM) of the cut-off tool (100);
   bonding agent (20) in an amount of 10% to 40% by weight, based on 100% by weight of the GAM of the cut-off tool (100); and
   fused and/or sintered abrasives (30) in an amount sufficient to bring the GAM of the cut-off tool (100) to 100% by weight.

2. Resin bonded cut-off tool (100) according to claim 1, wherein the rod shaped sintered bauxite abrasives (10) comprise aluminum oxide ($Al_2O_3$) (11) in an amount of 80% to 98% by weight, based on 100% by weight of the rod shaped sintered bauxite abrasives (10);
   a mixture of ferric oxide ($Fe_2O_3$) (12) and titanium dioxide ($TiO_2$) (13) in an amount of 5% to 15% by weight, based on 100% by weight of the sintered bauxite abrasives (10);
   silicon dioxide ($SiO_2$) (14) in an amount of 0.2% to 6% by weight, based on 100% by weight of the sintered bauxite abrasives (10).

3. Resin bonded cut-off tool (100) according to claim 1, wherein the rod shaped sintered bauxite abrasives (10), the bonding agent (20) and the fused and/or sintered abrasives (30) are arranged within a fabric and/or a plate (40).

4. Resin bonded cut-off tool (100) according to claim 1, wherein the resin bonded cut-off-tool (100) comprises a fixing element (50).

5. Resin bonded cut-off tool (100) according to claim 1, wherein the bonding agent (20) comprises a phenol-formaldehyde resin.

6. Resin bonded cut-off tool (100) according to claim 2, wherein the rod shaped sintered bauxite abrasives (10) comprise grains with a grain size of smaller than 15.0 micrometer.

7. Resin bonded cut-off tool (100) according to claim 2, wherein the rod shaped sintered bauxite abrasives have a diameter between 0.3 and 1.6 mm and an average length between 0.3 to 4.0 mm.

Fig. 1

Fig. 2

## Fig. 3

Fig. 4

Fig. 5

80,90

80,90

100

100

ST37

INOX

10,90

10,90

126

107

ST37

INOX

Europäisches
Patentamt

European
Patent Office

Office européen
des brevets

# EUROPEAN SEARCH REPORT

Application Number

EP 16 16 6808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 387 957 A (HOWARD ELMER E) 11 June 1968 (1968-06-11) * claims 1,7,13,16; figures 1-4 * * column 1, line 16 - line 24 * * column 1, line 39 - line 42 * * column 2, line 11 - line 14 * * column 3, line 5 - line 20 * * column 4, line 38 - line 54 * * column 5, line 60 - line 68 * * column 6, line 40 - line 50 * * column 9, line 65 - line 75 * ----- | 1-7 | INV. B24D3/28 C09K3/14 |
| X | EP 0 119 498 A2 (NORTON CO [US]) 26 September 1984 (1984-09-26) * page 1, line 9 - line 28; claims 1,3 * * page 2, line 12 - line 18 * * page 3, line 12 - line 26 * * page 4, line 3 * ----- | 1-7 | |
| X | US 4 253 850 A (RUE CHARLES V ET AL) 3 March 1981 (1981-03-03) * column 5, line 7 - line 14 * * column 5, line 51 - line 70 * ----- | 1 | TECHNICAL FIELDS SEARCHED (IPC) B24D C09K |
| X | US 3 079 243 A (UELTZ HERBERT F G) 26 February 1963 (1963-02-26) * column 1, line 8 - line 10 * * column 4, line 25 - line 30 * ----- | 1 | |
| X | WO 2008/034056 A1 (SAINT GOBAIN ABRASIVES INC [US]; SAINT GOBAIN ABRASIFS TECH [FR]; KLET) 20 March 2008 (2008-03-20) * page 6, line 15 - page 7, line 2 * * page 10, lines 3-8 * ----- | 1 | |

The present search report has been drawn up for all claims

| Place of search | Date of completion of the search | Examiner |
|---|---|---|
| Munich | 30 September 2016 | Herrero Ramos, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 6808

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2016

| Patent document cited in search report | | Publication date | Patent family member(s) | | Publication date |
|---|---|---|---|---|---|
| US 3387957 | A | 11-06-1968 | NONE | | |
| EP 0119498 | A2 | 26-09-1984 | EP | 0119498 A2 | 26-09-1984 |
| | | | ES | 8507374 A1 | 16-12-1985 |
| | | | JP | S59156670 A | 05-09-1984 |
| US 4253850 | A | 03-03-1981 | AT | 372895 B | 25-11-1983 |
| | | | AU | 522526 B2 | 10-06-1982 |
| | | | AU | 6107880 A | 19-02-1981 |
| | | | BE | 884713 A1 | 11-02-1981 |
| | | | BR | 8005073 A | 10-03-1981 |
| | | | CA | 1129216 A | 10-08-1982 |
| | | | DE | 3030506 A1 | 26-03-1981 |
| | | | ES | 8106430 A1 | 01-11-1981 |
| | | | FI | 802520 A | 18-02-1981 |
| | | | FR | 2463663 A1 | 27-02-1981 |
| | | | GB | 2058817 A | 15-04-1981 |
| | | | IT | 1166480 B | 06-05-1987 |
| | | | JP | S5633269 A | 03-04-1981 |
| | | | JP | S5754275 B2 | 17-11-1982 |
| | | | LU | 82704 A1 | 24-03-1981 |
| | | | NL | 8004570 A | 19-02-1981 |
| | | | SE | 450001 B | 01-06-1987 |
| | | | US | 4253850 A | 03-03-1981 |
| | | | ZA | 8004619 B | 29-07-1981 |
| US 3079243 | A | 26-02-1963 | BE | 596068 A1 | 14-04-1961 |
| | | | DE | 1471331 A1 | 23-01-1969 |
| | | | ES | 261215 A1 | 01-04-1961 |
| | | | GB | 965231 A | 29-07-1964 |
| | | | SE | 301107 B | 20-05-1968 |
| | | | US | 3079243 A | 26-02-1963 |
| WO 2008034056 | A1 | 20-03-2008 | AR | 062862 A1 | 10-12-2008 |
| | | | CN | 101528418 A | 09-09-2009 |
| | | | DK | 2059368 T3 | 30-09-2013 |
| | | | EP | 2059368 A1 | 20-05-2009 |
| | | | ES | 2427359 T3 | 30-10-2013 |
| | | | RU | 2009109371 A | 20-10-2010 |
| | | | TW | 200821094 A | 16-05-2008 |
| | | | US | 2008072500 A1 | 27-03-2008 |
| | | | US | 2014345202 A1 | 27-11-2014 |
| | | | WO | 2008034056 A1 | 20-03-2008 |

EPO FORM P0459

For more details about this annex : see Official Journal of the European Patent Office, No. 12/82

**REFERENCES CITED IN THE DESCRIPTION**

**Patent documents cited in the description**

- US 2014287654 A1